# EUROPÄISCHE PATENTANMELDUNG

(11) **EP 4 575 891 A1**
(43) Veröffentlichungstag der Anmeldung: **25.06.2025**
(21) Anmeldenummer: 24221342.9
(22) Anmeldetag: 19.12.2024
(51) Int. Cl.: G06K 19/077

(54) **FIXIERBARES KENNZEICHNUNGSMEDIUM, VERFAHREN ZUM HERSTELLEN DES FIXIERBAREN KENNZEICHNUNGSMEDIUMS, VERWENDUNG DES FIXIERBAREN KENNZEICHNUNGSMEDIUMS UND SYSTEM AUS EINER GUSSVORRICHTUNG/PATCH-VORRICHTUNG UND DEM FIXIERBAREN KENNZEICHNUNGSMEDIUM**

(30) Priorität: 22.12.2023 DE 102023136607
(71) Anmelder: PMG Besitz GmbH & Co. KG, 85276 Pfaffenhofen a.d. Ilm (DE)
(72) Erfinder: PLÖCKL, Roman, 85276 Pfaffenhofen a.d. Ilm (DE)
(74) Vertreter: Kuhnen & Wacker Patent- und Rechtsanwaltsbüro PartG mbB

(57) **Zusammenfassung**

Das fixierbare Kennzeichnungsmedium weist ein Trägersubstrat und eine RFID-Komponente mit einer Antennenstruktur und einem Chip auf. Die RFID-Komponente ist konfiguriert, um Information zu speichern. Die Antennenstruktur ist beispielsweise mittels eines Ätzverfahrens hergestellt. Das fixierbare Kennzeichnungsmedium ist an einem Objekt fixierbar.

## Beschreibung

Die Erfindung betrifft ein fixierbares Kennzeichnungsmedium, welches eine RFID-Komponente aufweist. Das Kennzeichnungsmedium ist beispielsweise für ein In-Mould-Fixierverfahren und/oder ein Post-Mould-Fixierverfahren geeignet.

Ein In-Mould-Fixierverfahren ist ein Gussverfahren (z.B. Spritzguss) für ein Gussobjekt, bei welchem ein Medium in das Gussobjekt eingebracht, daran angebracht oder in das Gussobjekt integriert wird. Beispielsweise kann ein solches Kennzeichnungsmedium ein Etikett sein, welches während der Herstellung eines Kunststoffteils (z.B. eine Getränkekiste) an der Außenseite des Kunststoffteils befestigt wird. Das Besondere dabei ist, dass sich das Kennzeichnungsmedium durch eine Erwärmung während des Gussverfahrens mit dem Kunststoffteil verbindet. Dadurch ist das Kennzeichnungsmedium fest mit dem Gussobjekt verbunden. Demzufolge besteht bei diesem Fixierverfahren eine hohe Beständigkeit gegenüber Temperaturschwankungen, Feuchtigkeit und mechanischen Belastungen.

Ein Post-Mould-Fixierverfahren ist ein Fixierverfahren, bei welchem ein Kennzeichnungsmedium an einem Objekt fixiert wird, indem das Kennzeichnungsmedium am Objekt aufgelegt wird und sich das Kennzeichnungsmedium mittels Wärme, beispielsweise durch eine Laservorrichtung, mit dem Objekt verbindet. Auch bei diesem Verfahren besteht eine hohe Beständigkeit gegenüber Temperaturschwankungen, Feuchtigkeit und mechanischen Belastungen. Der Unterschied zwischen den Fixierverfahren liegt darin, dass das Kennzeichnungsmedium einmal während des Formens des Objekts und einmal nach dem Formen des Objekts fixiert wird.

Kennzeichnungsmedien umfassen heutzutage oft RFID-Komponenten, welche eine Antenne und einen Chip enthalten. Hierfür wird zunächst Material, das eine Antenne ausbildet, auf einem Mould-Substrat, beispielsweise einem Polyolefin, HDPE, PP Material, aufgedruckt. Anschließend wird in einem sogenannten Pick And Place Verfahren ein Chip auf die Antennenstruktur aufgesetzt und eine Kontaktierung hergestellt. Anschließend wird das Kennzeichnungsmedium an einem Objekt fixiert, wobei sich die RFID-Komponente an der Oberfläche des Kennzeichnungsmediums befindet, welche mit einer erhöhten Temperatur beaufschlagt ist. Dadurch wird die Oberfläche mit der RFID-Komponente am Objekt fixiert, wobei die RFID-Komponente zwischen dem Objekt und dem Mould-Substrat eingeschlossen ist. Zudem kann das Mould-Substrat an der Seite, die der RFID-Komponente gegenüberliegt, mit Information bedruckt werden.

Bei dem vorher beschriebenen Kennzeichnungsmedium und bei dem vorher beschriebenen Verfahren können jedoch die folgenden Nachteile eintreten. Es besteht die Gefahr, dass der Chip oder die Antennenstruktur durch die Temperaturbelastung einen Schaden nimmt. Darüber hinaus ist die Strukturgröße bei einem Druckverfahren für die Antenne limitiert. Zudem sind der Detailgrad und die Genauigkeit beim Antennendruckverfahren beschränkt.

### Kurzfassung der Erfindung

Es ist eine Aufgabe der hier beschriebenen Erfindung, ein fixierbares Kennzeichnungsmedium vorzusehen, welches eine RFID-Komponente enthält, sowie einen hohen Detailgrad und eine hohe Genauigkeit der elektrischen Komponenten und gleichzeitig eine verringerte Temperaturempfindlichkeit aufweist.

Diese Aufgabe wird durch das fixierbare Kennzeichnungsmedium mit den Merkmalen des Anspruchs 1, das Verfahren zur Herstellung des fixierbaren Kennzeichnungsmediums mit den Merkmalen des Anspruchs 7, das Verfahren zur Herstellung des fixierbaren Kennzeichnungsmediums mit den Merkmalen des Anspruchs 8, die Verwendung des fixierbaren Kennzeichnungsmediums mit den Merkmalen des Anspruch 9, die Verwendung des fixierbaren Kennzeichnungsmediums mit den Merkmalen des Anspruch 10, das Fixiersystem zum Fixieren eines fixierbaren Kennzeichnungsmediums mit den Merkmalen des Anspruch 11 und das Fixiersystem zum Fixieren eines fixierbaren Kennzeichnungsmediums mit den Merkmalen des Anspruch 12 gelöst. Weitere vorteilhafte Ausführungsformen und Weiterentwicklungen sind Gegenstand der sich daran anschließenden Ansprüche.

Das fixierbare Kennzeichnungsmedium weist ein Trägersubstrat und eine RFID-Komponente mit einer Antennenstruktur und einem Chip auf. Die RFID-Komponente ist konfiguriert, um Information zu speichern.

Gemäß einem Aspekt weist das fixierbare Kennzeichnungsmedium zudem ein Mould-Substrat auf, welches derart konfiguriert ist, dass es sich unter Wärmeeinfluss mit einem Objekt verbindet. Dabei ist die RFID-Komponente zwischen dem Trägersubstrat und dem Mould-Substrat eingeschlossen.

Gemäß einem Aspekt ist die Antennenstruktur mittels eines Ätzverfahrens hergestellt.

Gemäß einem Aspekt weist das Trägersubstrat eine Bedruckungsoberfläche auf und die RFID-Komponente ist auf der zur Bedruckungsoberfläche gegenüberliegenden Oberfläche aufgebracht.

Gemäß einem Aspekt ist das Mould-Substrat auf das Trägersubstrat mit der RFID-Komponente kaschiert.

Ein Verfahren zur Herstellung des fixierbaren Kennzeichnungsmediums weist ein Bereitstellen des Trägersubstrats, ein Bereitstellen der RFID-Komponente, ein Bereitstellen des Mould-Substrats, ein Fixieren der RFID-Komponente auf dem Trägersubstrat, und ein Kaschieren des Mould-Substrats auf dem Trägersubstrat und/oder der RFID-Komponente auf.

Ein Verfahren zur Herstellung des fixierbaren Kennzeichnungsmediums weist ein Bereitstellen des Trägersubstrats, ein Bereitstellen der RFID-Komponente, ein Bereitstellen des Mould-Substrats, ein Fixieren der RFID-Komponente auf dem Mould-Substrat, und ein Kaschieren des Mould-Substrats auf dem Trägersubstrat auf.

Eine Verwendung des fixierbaren Kennzeichnungsmediums weist ein Bereitstellen des fixierbaren Kennzeichnungsmediums für ein Gussverfahren und ein Gießen eines Objekts auf. Dabei wird das fixierbare Kennzeichnungsmedium derart bereitgestellt, dass dieses in dem Objekt integriert ist.

Eine Verwendung des fixierbaren Kennzeichnungsmediums weist ein Bereitstellen des fixierbaren Kennzeichnungsmediums für ein Wärmefixierverfahren, ein Anlegen des fixierbaren Kennzeichnungsmediums auf ein Objekt und ein Wärmebehandeln des fixierbaren Kennzeichnungsmediums auf. Die Wärmebehandlung wird derart ausgeführt, dass sich das fixierbare Kennzeichnungsmedium mit dem Objekt verbindet.

Ein Fixiersystem zum Fixieren des fixierbaren Kennzeichnungsmediums auf das Objekt weist eine Gussvorrichtung zum Gießen des Objekts und eine Halteeinheit zum Halten des fixierbaren Kennzeichnungsmediums auf. Dabei hält die Halteeinheit das fixierbare Kennzeichnungsmedium derart, dass das fixierbare Kennzeichnungsmedium in das Objekt integriert wird.

Ein Fixiersystem zum Fixieren des fixierbaren Kennzeichnungsmediums auf das Objekt weist eine Halteeinheit zum Halten des fixierbaren Kennzeichnungsmediums auf dem Objekt und eine Patch-Vorrichtung zum Erwärmen des fixierbaren Kennzeichnungsmediums und einer Oberfläche des Objekts auf. Dabei entstehen Verbindungsstellen zwischen dem fixierbaren Kennzeichnungsmedium und dem Objekt.

### Kurze Beschreibung der Zeichnungen

- Fig. 1: zeigt eine Vorderseite und eine Rückseite eines fixierbaren Kennzeichnungsmediums gemäß einer ersten Ausführungsform.
- Fig. 2: zeigt ein Herstellungsverfahren eines fixierbaren Kennzeichnungsmediums.
- Fig. 3: zeigt eine Verwendung des fixierbaren Kennzeichnungsmediums in einem Gussverfahren.
- Fig. 4: zeigt eine Verwendung des fixierbaren Kennzeichnungsmediums in einem Patch-Verfahren.

### Genaue Beschreibung der Ausführungsformen

Im Folgenden werden die Ausführungsformen mit Bezug zu den Zeichnungen beschrieben. Es sei bemerkt, dass das fixierbare Kennzeichnungsmedium sowohl als "fixierbares Kennzeichnungsmedium" als auch als "Kennzeichnungsmedium" bezeichnet wird.

### (Erste Ausführungsform)

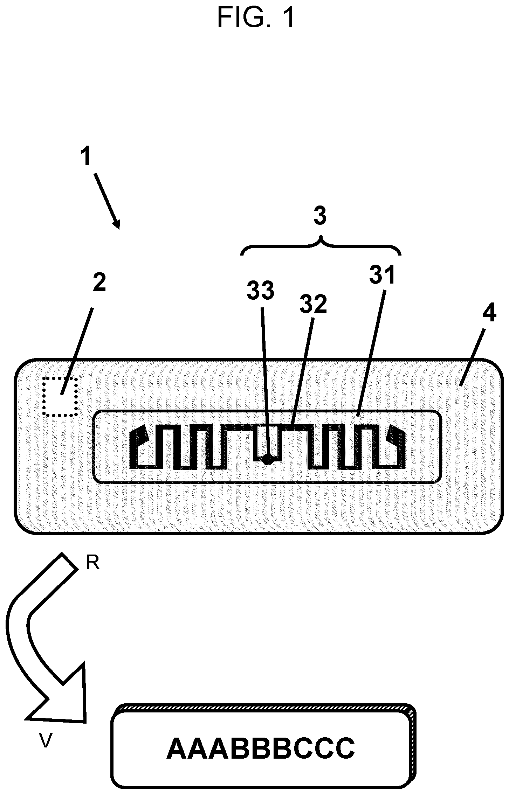

Wie in Fig. 1 gezeigt, weist das fixierbare Kennzeichnungsmedium 1 gemäß der ersten Ausführungsform ein Trägersubstrat 2, eine RFID-Komponente 3 und ein Mould-Substrat 4 auf, wobei das Trägersubstrat 2, die RFID-Komponente 3 und das Mould-Substrat 4 miteinander verbunden sind und die RFID-Komponente 3 zwischen dem Trägersubstrat 2 und dem Mould-Substrat 4 angeordnet ist. In Fig. 1 ist eine Rückseite R des Kennzeichnungsmediums 1 im hergestellten Zustand gezeigt. Das gestrichelte Rechteck in Fig. 1 zeigt das unter dem Mould-Substrat 4 liegende Trägersubstrat 2. Die RFID-Komponente 3 ist durch das Mould-Substrat 4 sichtbar, welches gemäß der ersten Ausführungsform transparent ist.

Das Trägersubstrat 2 ist beispielsweise ein bedruckbares Etikettenmaterial, Folienmaterial usw., welches gemäß der ersten Ausführungsform in einer rechteckform ausgestaltet ist. Das Trägersubstrat 2 ist zumindest an einer Seite bedruckbar, wie an der Vorderseite V des Kennzeichnungsmediums 1 in Fig. 1 gezeigt ist.

Die RFID-Komponente 3 weist eine Haftfolie 31, eine Antennenstruktur 32 und einen Chip 33 auf. Die Antennenstruktur32 und der Chip 33 sind elektrisch verbunden, sodass eine RFID-Funktionalität gewährleistet ist. Die Haftfolie 31 gemäß der ersten Ausführungsform weist an einer Seite vollflächig ein Haftmittel auf, mittels welchem die Antennenstruktur 32 an der Haftfolie 31 haftet. Die RFID-Komponente 3 ist mit der Haftfolie 31 am Trägersubstrat 2 fixiert, wobei die RFID-Komponente 3 eine geringere Flächenausdehnung aufweist als das Trägersubstrat 2.

Ferner ist die Antennenstruktur 32 mittels eines Ätzverfahrens hergestellt. Das heißt, die Antennenstruktur 32 wird nicht auf das Trägersubstrat 2 aufgedruckt, sondern mittels des Ätzverfahrens hergestellt und anschließend auf die Haftfolie 31 appliziert. Durch die Haftfolie 31 kann die Antennenstruktur 32 auf einfache Weise aufgebracht werden. Das Ätzverfahren hat den Vorteil, dass eine hohe strukturelle Genauigkeit erreicht wird und detailliertere und kleine Strukturen möglich sind. Zudem können beim Ätzverfahren im Vergleich zum Antennendruckverfahren höhere Stückzahlen in kürzerer Zeit erzielt werden.

Das Mould-Substrat 4 ist auf das Trägersubstrat 2 mit der RFID-Komponente 3 aufgebracht bzw. kaschiert. Gemäß der ersten Ausführungsform ist die RFID-Komponente 3 vollständig zwischen dem Trägersubstrat 2 und dem Mould-Substrat 4 eingeschlossen, da auch das Mould-Substrat 4 eine größere Flächenausdehnung als die RFID-Komponente aufweist. Das Mould-Substrat 4 ist ein Material, welches sich unter Wärmeeinfluss mit einem anderen Material, z.B. Kunststoffen, verbindet. Gemäß der ersten Ausführungsform kann das Mould-Substrat 4 beispielsweise aus Polyolefin, PP, PE, HDPE bestehen.

Das Kennzeichnungsmedium 1 weist durch den vorher beschriebenen Aufbau an der Rückseite R vollflächig das Mould-Substrat 4 auf. Das kaschierte Mould-Substrat 4 ist gemäß dieser Ausführungsform dauerhaft und fest mit dem Trägersubstrat 2 und der RFID-Komponente 3 verbunden. Da das Mould-Substrat 4 vollflächig an der Rückseite R vorgesehen ist, ergibt sich unter Wärmeeinfluss eine vollflächige Verbindung zwischen dem fixierbaren Kennzeichnungsmedium 1 und einem Objekt 5, an welchem das Kennzeichnungsmedium 1 fixiert wird.

### (Vorteile)

Das fixierbare Kennzeichnungsmedium 1 gemäß der ersten Ausführungsform erzielt mehrere Vorteile.

Durch die geätzte Antennenstruktur 32 kann eine verbesserte RFID-Funktionalität sichergestellt werden. Zudem ergeben sich durch das verbesserte Herstellungsverfahren weitere Anwendungsfelder für die RFID-Komponente 3.

Die Haftfolie 31 der RFID-Komponente 3 kann ein Material sein, welches sich nicht mit dem Objekt 5, mit welchem das Kennzeichnungsmedium 1 fixiert werden soll, verbindet. Durch das kaschierte Mould-Substrat 4 wird eine vollflächige Verbindung zwischen dem Objekt 5 und dem Kennzeichnungsmedium 1 hergestellt, wenn diese miteinander fixiert werden.

Zudem stellen die Haftfolie 31 und das Mould-Substrat 4 eine Schutzschicht für die Antennenstruktur 32 und den Chip 33 dar. Wird das Kennzeichnungsmedium 1 von einer Rückseite R aus erwärmt, um sich mit dem Objekt 5 zu verbinden, werden die Antennenstruktur 32 und der Chip 33 weniger stark erwärmt, da die Haftfolie 31 und das Mould-Substrat 4 zwischen der Wärmequelle und der Antennenstruktur 32 und dem Chip 33 liegen. Die Wahrscheinlichkeit einer Beschädigung der RFID-Komponente 3 und eine Temperaturempfindlichkeit des Kennzeichnungsmediums 1 können somit verringert werden.

### (Zweite Ausführungsform)

Ein Kennzeichnungsmedium 1 gemäß einer zweiten Ausführungsform weist den gleichen Aufbau wie das Kennzeichnungsmedium 1 gemäß der ersten Ausführungsform auf. Im Folgenden wird lediglich der Unterschied zwischen der ersten und der zweiten Ausführungsform beschrieben.

Gemäß der ersten Ausführungsform haftet die RFID-Komponente 3 auf dem Trägersubstrat 2. Im Gegensatz hierzu haftet die RFID-Komponente 3 der zweiten Ausführungsform auf dem Mould-Substrat 4, das heißt, das Haftmittel der Haftfolie 31 ist der Rückseite R zugewandt.

Ferner ist es möglich, dass die RFID-Komponente 3 mit einem separaten Haftmittel oder nur formschlüssig zwischen dem Trägersubstrat 2 und dem Mould-Substrat 4 eingeschlossen ist.

Das fixierbare Kennzeichnungsmedium 1 gemäß der zweiten Ausführungsform erzielt die gleichen Vorteile wie das fixierbare Kennzeichnungsmedium 1 gemäß der ersten Ausführungsform.

### (Dritte Ausführungsform)

Ein Kennzeichnungsmedium 1 gemäß einer dritten Ausführungsform weist einen anderen Aufbau wie das Kennzeichnungsmedium 1 gemäß der ersten oder zweiten Ausführungsform auf.

Im Gegensatz zur ersten und zweiten Ausführungsform weist das Kennzeichnungsmedium 1 der dritten Ausführungsform kein Mould-Substrat 4 auf. Das heißt, die RFID-Komponente 3 ist auf dem Trägersubstrat 2 fixiert und liegt an der Rückseite R frei.

In diesem Fall ist das Trägersubstrat 2 ein Material, welches sich wie das Mould-Substrat 4 unter Wärmeeinfluss mit einem Objekt 5 verbindet. Da das Mould-Substrat 4 nicht vorgesehen ist und die Haftfolie 31 der RFID-Komponente gemäß dieser Ausführungsform unter Wärmeeinfluss keine Verbindung eingeht, entsteht bei einem Fixierungsvorgang keine vollflächige Verbindung zwischen dem fixierbaren Kennzeichnungsmedium 1 und dem Objekt 5. Dennoch ist das fixierbare Kennzeichnungsmedium 1 gemäß der dritten Ausführungsform an dem Objekt 5 fixierbar.

Zudem können ähnliche Vorteile wie bei der ersten und zweiten Ausführungsform erreicht werden. Beispielsweise besteht ebenfalls eine geringere Temperaturempfindlichkeit, da die Haftfolie 31 zwischen der Wärmequelle und der Antennenstruktur 32 und dem Chip 33 liegt. Ferner ist die Antennenstruktur 32 gemäß der dritten Ausführungsform ebenfalls mittels des Ätzverfahrens hergestellt.

### (Verfahren)

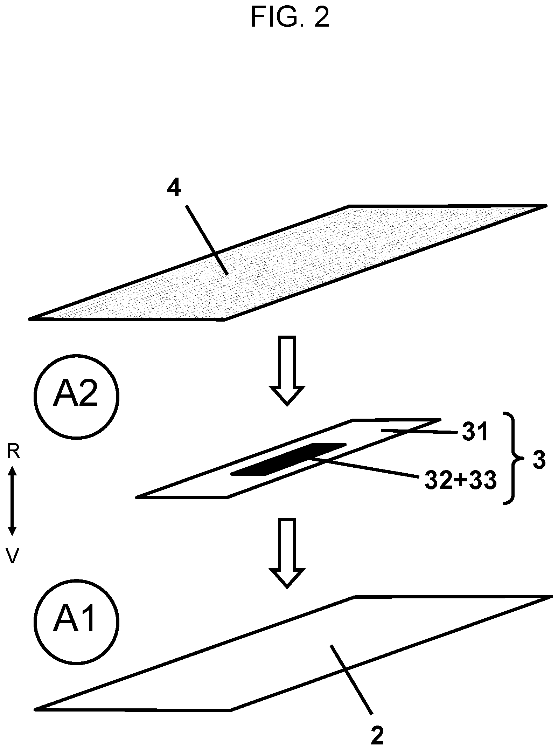

Das fixierbare Kennzeichnungsmedium 1 wird, wie in Figur 2 gezeigt, hergestellt.

Zunächst wird das Trägersubstrat 2 bereitgestellt. Auf das Trägersubstrat 2 wird die RFID-Komponente 3 aufgebracht, wobei die RFID-Komponente 3 mittels der Haftfolie 31 auf dem Trägersubstrat 2 fixiert ist. Die RFID-Komponente 3 weist die geringere Flächenausdehnung als das Trägersubstrat 2 auf. Die RFID-Komponente 3 kann hinsichtlich des Trägersubstrats 2 beim Aufbringen im Wesentlichen mittig ausgerichtet werden. Jedoch ist die Aufbringungsposition je nach Anwendung frei wählbar. Dieser Schritt entspricht dem Schritt A1.

Nach dem Schritt A1 folgt der Schritt A2, in welchem das Mould-Substrat 4 auf das Trägersubstrat 2 mit der RFID-Komponente 3 kaschiert wird. Hierbei wird ein Haftmittel vollflächig auf der Rückseite des Trägersubstrats 2 mit der RFID-Komponente 3 aufgebracht und anschließend das Mould-Substrat 4 vollflächig an der Rückseite R darübergelegt. Durch das Haftmittel werden die Komponenten dauerhaft und fest miteinander verbunden. Dieser Vorgang wird als Kaschieren des Mould-Substrats 4 bezeichnet.

Gemäß den vorher beschriebenen Ausführungsformen ist das Mould-Substrat 4 transparent. Dadurch ist es möglich einen UV-Kleber als Haftmittel beim Kaschieren zu verwenden. Sobald der Kleber ausgehärtet ist, ist das Mould-Substrat 4 dauerhaft auf dem Trägersubstrat 2 mit der RFID-Komponente 3 fixiert.

Das beschriebene Verfahren dient zur Herstellung des fixierbaren Kennzeichnungsmediums 1 gemäß der ersten Ausführungsform. Zur Herstellung der fixierbaren Kennzeichnungsmedien 1 gemäß der zweiten und dritten Ausführungsform kann das Verfahren entsprechend angepasst werden.

Ferner ist es möglich, eine Vielzahl von RFID-Komponenten 3 auf einem Trägersubstrat 2 zu fixieren und anschließend das Mould-Substrat 4 zu kaschieren. Im Anschluss entsteht entweder ein fixierbares Kennzeichnungsmedium 1, welches eine Vielzahl von RFID-Komponenten 3 aufweist oder es kann ein Stanzen, Schneiden, Perforieren usw. ausgeführt werden, um eine Vielzahl von einzelnen fixierbaren Kennzeichnungsmedien 1 zu schaffen.

### (Verwendung - In-Mould)

Das fixierbare Kennzeichnungsmedium 1 kann abhängig von den verwendeten Materialien für ein In-Mould- und/oder für ein Post-Mould-Verfahren verwendet werden.

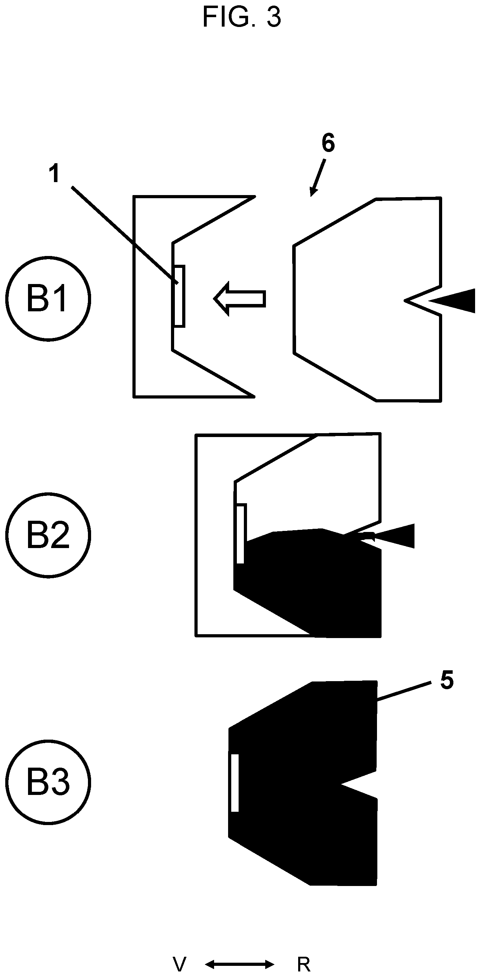

Beim In-Mould-Verfahren wird das fixierbare Kennzeichnungsmedium 1 während eines Gussvorgang mit einem Objekt 5 verbunden oder darin integriert. Fig. 3 zeigt beispielhaft einen Spritzgussvorgang.

In Schritt B 1 wird das Kennzeichnungsmedium 1 in einer Gussvorrichtung 6 eingesetzt oder eingelegt und an einer vorbestimmten Position gehalten. Dabei zeigt die Rückseite R des Kennzeichnungsmediums 1 in Richtung des Innenraums der Gussvorrichtung 6. Die bedruckte Vorderseite V des Kennzeichnungsmediums 1 zeigt vom Innenraum der Gussvorrichtung 6 weg und liegt hier an der Innenwand der Gussvorrichtung 6 an.

In Schritt B2 wird die Gussvorrichtung geschlossen und es erfolgt eine Einspritzung von beispielsweise einem flüssigen Kunststoff. Dieser füllt den Innenraum der Gussvorrichtung 6, um das Objekt 5 auszuformen. Dabei gelangt der flüssige und erwärmte Kunststoff mit dem Kennzeichnungsmedium 1 in Kontakt. Durch die Wärmeentwicklung verbinden sich der flüssige Kunststoff, der das Objekt 5 ausbildet, und das Mould-Substrat 4 des Kennzeichnungsmediums 1. Hierbei kann eine Vulkanisierung zwischen den Materialien stattfinden, sodass sich diese dauerhaft miteinander an den Oberflächen verbinden.

In Schritt B3 wird das verfestigte Objekt 5 aus der Gussvorrichtung 6 entnommen. Am Objekt 5 ist das Kennzeichnungsmedium 1 dauerhaft fixiert. Die Vorderseite V der Kennzeichnungsmediums 1 liegt nach außen frei. Dadurch ist die bedruckte Oberfläche des Kennzeichnungsmediums 1 sichtbar.

Es ist jedoch auch möglich, das Kennzeichnungsmedium 1 vollständig in das Objekt 5 einzugießen. Hierbei liegt entweder ein transparentes Gussmaterial vor oder das Kennzeichnungsmedium 1 weist keine Bedruckung oder zumindest keine später benötigte Bedruckung auf.

Hierbei sei nochmals erwähnt, dass die RFID-Komponente 3 während des Gießens vor einer thermischen Belastung geschützt ist, da das Mould-Substrat 4 nicht jedoch die RIFD-Komponente 3 direkt mit dem flüssigen Kunststoff in Kontakt kommt.

Gemeinsam bilden die Gussvorrichtung 6 und das fixierbare Kennzeichnungsmedium 1 ein Fixiersystem zum Fixieren des fixierbaren Kennzeichnungsmediums 1 and dem Objekt 5.

### (Verwendung - Post-Mould)

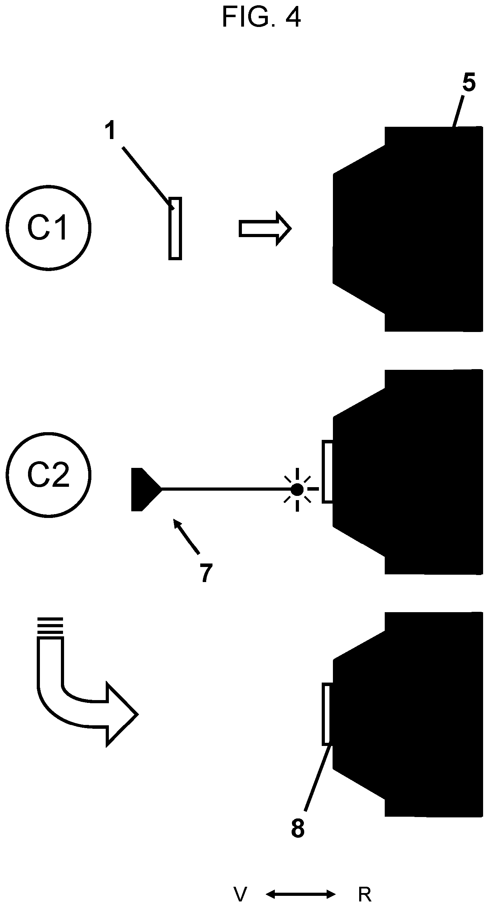

Das Post-Mould-Verfahren unterscheidet sich zum In-Mould-Verfahren dahingehend, dass das Kennzeichnungsmedium 1 nicht während des Gießens, sondern nach dem Gießen fixiert wird. Dennoch beruht auch das Post-Mould-Verfahren auf einem Thermofixierprinzip. Das Post-Mould-Verfahren ist in Fig. 4 veranschaulicht.

In Schritt C1 des Post-Mould-Verfahrens werden das fixierbare Kennzeichnungsmedium 1 und das Objekt 5 bereitgestellt. Das Kennzeichnungsmedium 1 wird auf das Objekt 5 an einer vorbestimmten Position aufgelegt oder gehalten. Dabei zeigt die Vorderseite V des Kennzeichnungsmediums 1 vom Objekt 5 weg, wobei die Rückseite R des Kennzeichnungsmediums 1 dem Objekt zugewandt ist.

In Schritt C2 wird beispielsweise eine Patch-Vorrichtung 7 bereitgestellt. Die Patch-Vorrichtung 7 kann beispielsweise ein Laser sein. Mit dem Laser können spezifische Positionen oder Bereiche des Kennzeichnungsmediums 1, welches sich an dem Objekt 5 befindet, bestrahlt werden. Dies wird im Folgenden *"Patchen"* genannt. Dadurch erwärmt sich das Mould-Substrat 4, das hier beispielsweise eine siegelbare Folie sein kann, auch an der Rückseite R des Kennzeichnungsmediums 1. Die Oberfläche des Objekts 5 an den bestrahlten Stellen wird ebenfalls erwärmt. An den so erwärmten Stellen bildet sich eine Verbindungsstelle 8 aus, an welcher sich das Mould-Substrat 4 und das Objekt 5 dauerhaft verbinden. Der Laser kann beispielsweise umlaufend beaufschlagt werden, sodass sich eine am Kennzeichnungsmedium 1 umlaufende Verbindungsstelle 8 ergibt bzw. ausbildet.

Nach dem Schritt C2 ist das fixierbare Kennzeichnungsmedium 1 durch die Verbindungsstelle 8 oder die Vielzahl an Verbindungsstellen 8 dauerhaft mit dem Objekt 5 verbunden.

Hierbei sei erwähnt, dass die RFID-Komponente 3 während des Patchens vor einer thermischen Belastung geschützt ist, da das Mould-Substrat 4 nicht jedoch die RIFD-Komponente 3 direkt mit der erwärmten Oberfläche des Objekts 5 in Kontakt kommt.

Gemeinsam bilden die Patch-Vorrichtung 7 und das fixierbare Kennzeichnungsmedium 1 ein Fixiersystem zum Fixieren des fixierbaren Kennzeichnungsmediums 1 and dem Objekt 5. Die Patch-Vorrichtung 7 kann dabei eine geeignete Vorrichtung sein, welche eine punktuelle oder flächige Erwärmung an der Außenseite des Kennzeichnungsmediums 1 und dem Objekt erzeugen kann. Das heißt, die Patch-Vorrichtung 7 ist nicht notwendigerweise ein Laser.

### (Modifikationen)

Gemäß den vorher beschriebenen Ausführungsformen sind ein Trägersubstrat 2 und ein Mould-Substrat 4 vorgesehen. Auch wenn unterschiedliche Begriffe für das Trägersubstrat 2 und das Mould-Substrat 4 verwendet werden, können beide aus einem gleichen Material hergestellt sein.

Das fixierbare Kennzeichnungsmedium 1 wurde als rechteckförmig beschrieben. Die Form des fixierbaren Kennzeichnungsmediums 1 kann jedoch beliebig sein.

Ferner wurde das Trägersubstrat 2 als bedruckbar beschrieben. Das Trägersubstrat 2 muss nicht notwendigerweise bedruckbar sein und kann zwei nicht bedruckbare Oberflächen aufweisen.

Das Trägersubstrat 2, die RFID-Komponente 3 und das Mould-Substrat 4 wurden als dauerhaft miteinander verbunden beschrieben. Dies ist von Vorteil, sofern eine dauerhafte Kennzeichnung am Objekt 5 durch das fixierbare Kennzeichnungsmedium 1 erreicht werden soll. Es ist jedoch möglich, die Stabilität und Festigkeit der Verbindung geeignet einzustellen und somit auch eine Verbindung einzustellen, welche nicht dauerhaft ist. Ebenso können eine Verbindungsfläche oder die Verbindungsstellen zwischen dem Objekt 5 und dem Kennzeichnungsmedium 1 geeignet eingestellt werden.

Ferner wurde das Mould-Substrat 4 als vollflächig aufgebracht beschrieben. Das Mould-Substrat 4 kann eine geeignete Form aufweisen und muss nicht notwendigerweise vollflächig aufgebracht sein. Beispielsweise kann das Mould-Substrat 4 ausschließlich auf der Haftfolie 31 aufgebracht sein. Ferner kann, wie bei der dritten Ausführungsform beschrieben, auf das Mould-Substrat 4 verzichtet werden.

### (Bezugszeichenliste)

1 Kennzeichnungsmedium
2 Trägersubstrat
3 RFID-Komponente
31 Haftfolie
32 Antennenstruktur
33 Chip
4 Mould-Substrat
5 Objekt
6 Gussvorrichtung
7 Patch-Vorrichtung
8 Verbindungsstelle
V Vorderseite
R Rückseite

## Patentansprüche

1. Fixierbares Kennzeichnungsmedium (1), aufweisend:
ein Trägersubstrat (2),
eine RFID-Komponente (3) mit zumindest einer Antennenstruktur (32) und
einem Chip (33), wobei die RFID-Komponente (3) konfiguriert ist, Information zu speichern.

2. Fixierbares Kennzeichnungsmedium (1) nach Anspruch 1, ferner aufweisend:
ein Mould-Substrat (4), welches derart konfiguriert ist, dass es sich unter Wärmeeinfluss mit einem Objekt (5) verbindet, und
die RFID-Komponente (3) zwischen dem Trägersubstrat (2) und dem Mould-Substrat (4) eingeschlossen ist.

3. Fixierbares Kennzeichnungsmedium (1) nach Anspruch 1 oder Anspruch 2, wobei
die Antennenstruktur (32) mittels eines Ätzverfahrens hergestellt ist.

4. Fixierbares Kennzeichnungsmedium (1) nach einem der Ansprüche 1 bi 3, wobei
die RFID-Komponente (3) eine Haftfolie (31), auf der zumindest die Antenne haftet, aufweist, und
die RFID-Komponente (3) mittels der Haftfolie (31) an dem Trägersubstrat (2) fixiert ist.

5. Fixierbares Kennzeichnungsmedium (1) nach einem der Ansprüche 1 bis 4, wobei
das Trägersubstrat (2) eine Bedruckungsoberfläche aufweist und die RFID-Komponente (3) auf der zur Bedruckungsoberfläche gegenüberliegenden Oberfläche aufgebracht ist.

6. Fixierbares Kennzeichnungsmedium (1) nach einem der Ansprüche 1 bis 5, wobei
das Mould-Substrat (4) auf das Trägersubstrat (2) mit der RFID-Komponente (3) kaschiert ist.

7. Verfahren zur Herstellung eines fixierbaren Kennzeichnungsmediums (1) gemäß einem der Ansprüche 1 bis 6, aufweisend:
Bereitstellen eines Trägersubstrats (2),
Bereitstellen einer RFID-Komponente (3),
Bereitstellen eines Mould-Substrats (4),
Fixieren der RFID-Komponente (3) auf dem Trägersubstrat (2), und
Kaschieren des Mould-Substrats (4) auf dem Trägersubstrat (2) und/oder der RFID-Komponente (3).

8. Verfahren zur Herstellung eines fixierbaren Kennzeichnungsmediums (1) gemäß einem der Ansprüche 1 bis 6, aufweisend:
Bereitstellen eines Trägersubstrats (2),
Bereitstellen einer RFID-Komponente (3),
Bereitstellen eines Mould-Substrats (4),
Fixieren der RFID-Komponente (3) auf dem Mould-Substrat (4), und
Kaschieren des Mould-Substrats (4) auf dem Trägersubstrat (2).

9. Verwendung eines fixierbaren Kennzeichnungsmediums (1) gemäß einem der Ansprüche 1 bis 6, aufweisend:
Bereitstellen des fixierbaren Kennzeichnungsmediums (1) für ein Gussverfahren, und
Gießen eines Objekts (5), wobei
das fixierbare Kennzeichnungsmedium (1) derart bereitgestellt ist, dass dieses in dem Objekt (5) integriert ist.

10. Verwendung eines fixierbaren Kennzeichnungsmediums (1) gemäß einem der Ansprüche 1 bis 6, aufweisend:
Bereitstellen des fixierbaren Kennzeichnungsmediums (1) für ein Wärmefixierverfahren,
Anlegen des fixierbaren Kennzeichnungsmediums (1) auf ein Objekt (5), und Wärmebehandeln des fixierbaren Kennzeichnungsmediums (1) derart, dass sich das fixierbare Kennzeichnungsmedium (1) mit dem Objekt (5) verbindet.

11. Fixiersystem zum Fixieren eines fixierbaren Kennzeichnungsmediums (1) gemäß einem der Ansprüche 1 bis 6 auf ein Objekt (5), aufweisend:
eine Gussvorrichtung (6) zum Gießen des Objekts (5), und
eine Halteeinheit zum Halten des fixierbaren Kennzeichnungsmediums (1), wobei
die Halteeinheit das fixierbare Kennzeichnungsmedium (1) derart hält, dass das fixierbare Kennzeichnungsmedium (1) beim Gießen des Objekts (5) in das Objekt (5) integriert wird.

12. Fixiersystem zum Fixieren eines fixierbaren Kennzeichnungsmediums (1) gemäß einem der Ansprüche 1 bis 6 auf ein Objekt (5), aufweisend:
eine Halteeinheit zum Halten des fixierbaren Kennzeichnungsmediums (1) auf dem Objekt (5), und
eine Patch-Vorrichtung (7) zum Erwärmen des fixierbaren Kennzeichnungsmediums (1) und einer Oberfläche des Objekts (5), sodass Verbindungsstellen (8) zwischen dem fixierbaren Kennzeichnungsmedium (1) und dem Objekt (5) ausgebildet sind.
